# EUROPÄISCHE PATENTANMELDUNG

(11) **EP 1 506 946 A2**
(43) Veröffentlichungstag der Anmeldung: **16.02.2005**
(21) Anmeldenummer: 03717820.9
(22) Anmeldetag: 04.02.2003
(51) Int. Cl.: C04B 2/00

(54) **VERFAHREN ZUM SCHNEIDEN VON NICHTMETALLISCHEN MATERIALIEN UND VORRICHTUNG ZUR DURCHFÜHRUNG DES VERFAHRENS**

(30) Priorität: 21.02.2002 RU 2002105388
(71) Anmelder: Alexeev, Andrey Mikhaylovich, St.Petersburg, 199155 (RU)
(72) Erfinder: ALEXEEV, Andrey Mikhaylovich, St.Petersburg, 199155 (RU); KRYZHANOVSKIY, Vladimir Iosifovich, St.Petersburg, 197372 (RU); KHAIT, Oleg Viktorovich, St.Petersburg, 194156 (RU)
(74) Vertreter: Jeck, Anton, Dipl.-Ing.
(86) Internationale Anmeldenummer: PCT/RU2003/000042
(87) Internationale Veröffentlichungsnummer: WO 2003/072521

(57) **Zusammenfassung**

Die Erfindung betrifft ein Verfahren zur Stoffbearbeitung, insbesondere ein Verfahren zum Schneiden- und Ritzen von nichtmetallischen Materialien, hauptsächlich von besonders festen (korundartigen) Stoffen mit einer Halbteilerdeckschicht, Glas, Pyroceram, Keramik usw. Dieses Verfahren weist folgende Schritte auf: zum Schneiden wird eine Laserstrahlung verwendet, bei der mittels eines Impulses mit bestimmten Parametern solche Bedingungen geschaffen werden können, die einen Durchbruch des Materials aufgrund einer Stoß- und Multiphotonenionisation ermöglichen. Infolgedessen wird ein Defekt von sehr geringer Größe geschaffen (dieser Defekt ist der Größe der Gittergrenze ähnlich). Die Wahl des Abstands zwischen den Durchbruchspunkten ermöglicht praktisch eine Übereinstimmung der Laserimpulsenergie mit der Energie, die für Bildung eines Spalts zwischen den zwei Durchbruchpunkten nötig ist.

## Beschreibung

Die Erfindung betrifft ein Verfahren zur Stoffbearbeitung, insbesondere ein Verfahren zum Schneiden und Ritzen von nichtmetallischen Materialien, hauptsächtich von besonders festen (korundartigen) Stoffen mit einer Halbteilerdeckschicht, Glas, Pyroceram, Keramik usw. Diese Erfindung kann auf dem Gebiet der Elektronikindustrie in folgenden Fällen verwendet werden: bei der Trennung von Grundplatten, optischen Elementen und Kristallen, beim Schneiden von Flüssigkristallanzeigen, Photomasken, Magnetscheiben und magnetooptischen Disketten sowie bei der Herstellung von Glas, Spiegeln usw.

Zu den traditionellen Bearbeitungsverfahren von nichtmetallischen Materialien, wie Quarz, Leukosaphir u.a., gehören das Schneiden und Ritzen mit Hilfe eines Diamant- und Hartmetallwerkzeugs, sowie die Diamantschleifbearbeitung von Kanten. Verbrauchsmaterialien, die bei diesen Verfahren verwendet werden, sind kostspielig. Außerdem sind viele auf diese Weise hergestellte Artikel nicht maßgenau, weil die oben genannten Prozeduren intensives, manuelles Bearbeiten vorsehen.

Ferner ist ein Verfahren zum Schneiden von nichtmetallischen Materialien bekannt, bei dem das Material mit Hilfe von Laserstrahlung bis zu einer solchen Temperatur erhitzt wird, die seine Erweichungstemperatur nicht übertrifft; dann wird die Erhitzungszone lokal abgekühlt, wobei die Geschwindigkeit der verhältnismäßigen Bewegung von Bündel zum Material, sowie der Ort der Lokalabkühlung von der Erhitzungszone abhängig von der Entstehung eines Durchtrennrisses im Material (Patent der RF Nº 2024441, C03B33/02, veröffentlicht 15.12.94) gewählt wird.

Zum Nachteil dieses Verfahrens gehören Schwierigkeiten, die beim Auftreten eines Kleindefekts aus Gründen der großen Bündelenergetik und großen Strahlungswellenlänge entstehen; dies führt dazu, dass die Schnittstelle nicht präzise bestimmt wird. Die Feinheit des Schnitts vermindert sich infolge der hohen Lokaferhitzung des bearbeiteten Modells.

Femer ist ein Verfahren bekannt, das ein Laserritzen und eine Zerstörung von bedeckten Glasschichten vorsieht. Dabei wird der Laserstrahl von einem CO₂-Impulslaser, dessen Wellenlänge durch Glas stark absorbiert wird, auf das Material gerichtet; die Laserstrahlung wird auf die Materialoberfläche oder innerhalb des Materials konzentriert; im Konzentrationspunkt entsteht ein Defekt (Patent WO 0075983, H01L21/78, veröffentlicht 14.12.2000).

Der Nachteil dieses Verfahrens und des Geräts zum Schneiden von nichtmetatlischen Materialien besteht darin, dass infolge des Materialverlustes in der Defektzone die Defektgröße die Größe des Fokalflecks des Laserbündels übertrifft und mehr als 20mkm ausmacht. Die Defektgröße entspricht den Forderungen nicht, die an die Feinheit des Schnitts bei einer Einteilung von Modellen in Mikrochips gestellt werden. Die Qualität des bearbeiteten Modells wird wegen der oben genannten Erhitzung, Verdampfung des Materials aus der Schnittzone und Fällung des Verdampfermaterials auf die Oberfläche schlechter.

Ferner ist ein Verfahren bekannt, bei dem ein Laserritzen und eine Zerstörung von bedeckten Glasschichten vorgesehen ist. Dabei wird der Laserstrahl von einem KrF-Impulslaser, dessen Wellenlänge durch Glas stark absorbiert wird, auf das Material gerichtet; die Laserstrahlung wird auf die Materialoberfläche oder innerhalb des Materials konzentriert; im Konzentrationspunkt entsteht ein Defekt (USA-Patent 5961852, B23K26/00, veröffentlicht 5.10.99).

Das Gerät, das bei diesem Verfahren verwendet wird, weist ein Lasersystem, ein optomechanisches System der Strahlungsrichtung und -konzentration, einen Mechanismus für die Modellbewegung, eine Videokamera zur Überwachung des Verfahrens, einen Computer und eine Steuervorrichtung zur Steuerung aller elektronischen Systeme sowie eine Bildbearbeitung auf.

Der Nachteil dieses Verfahrens besteht darin, dass seine Verwendung beschränkt ist, weil dieses Verfahren aufgrund der Verwendung des KrF-Lasers nur für die Bearbeitung eines bestimmten Glastyps und bestimmter Deckschichten geeignet ist. Es sei erwähnt, dass dieses Schneidverfahren sich durch eine niedrige Bearbeitungsgeschwindigkeit auszeichnet, die sich durch die niedrige Frequenz der Strahlungsimpulse erklärt. Bei diesem Verfahren wird das Modell nicht tief bearbeitet, weil die Strahlung stark absorbiert wird.

Die Erfindung strebt das Ziel an, ein Verfahren zum Schneiden von nichtmetallischen Materialien, darunter auch besonders festen Stoffen und Materialien mit Halbteilerdeckschicht, zu schaffen. Dieses Verfahren sieht folgendermaßen aus: zum Schneiden wird eine Laserstrahlung verwendet, bei der aufgrund eines Impulses mit bestimmten Parametern solche Bedingungen geschaffen werden können, die den Durchbruch des Materials aufgrund einer Stoß- und Multiphotonenionisation ermöglichen. Infolgedessen wird ein Defekt sehr kleiner Größe geschaffen (dieser Defekt ist nach der Größe der Gittergrenze ähnlich). Die Wahl des Abstands zwischen den Durchbruchspunkten ermöglicht praktisch die Übereinstimmung der Laserimpulsenergie mit der Energie, die für die Bildung eines Spalts zwischen den zwei Durchbruchpunkten nötig ist. Wenn die Rückwand des geschnittenen Modells matt ist, vermindert sich die Reißgrenze. Das Verfahren zeichnet sich durch eine niedrige Energieintensität aus und ergibt die Möglichkeit, die oben genannten Materialien mit einer Stärke von einigen Mikrometern bis 300-500mkm präziser zu schneiden. Eine Anordnung von Konzentrationspunkten an der Rückwand ermöglicht solche Bedingungen zu schaffen, bei denen der Dichtewert so ist, dass die Zerstörungsgrenze der Halbteilerdeckschicht nicht überschritten wird. Das ergibt die Möglichkeit, die erforderlichen Elemente ohne Zerstörung der Deckschichten auszuschneiden. Dazu trägt auch folgendes bei: die Defektformpunkte werden längs der Polarisationsrichtung der Laserstrahlung angeordnet, und es wird eine zusätzliche Schicht von Defekten innerhalb des Materials senkrecht zur Oberfläche und parallel zur ersten Schicht von Punkten gebildet.

Das oben genannte, technische Ergebnis wird folgendermaßen erreicht: das Schneiden von transparenten, nichtmetallischen Materialien erfolgt mit Hilfe eines Laserstrahls, der von einem Impulslaser auf das Material gerichtet wird; die Laserstrahlung wird auf die Materialoberfläche oder innerhalb des Materials konzentriert; im Konzentrationspunkt entsteht ein Defekt. Dabei wird eine Impulslaserstrahlung verwendet, die folgende Parameter aufweist: eine Wellenlänge von etwa 1m/km, eine Impulsdauer von 10-100ps und eine Impulsenergie bis zu 100mkJ. Dabei wird bei der Bildung des Bündels davon ausgegangen, dass die Strahlungsdichte auf der Oberfläche die Zerstörungsgrenze der Halbteilerdeckschicht nicht übertreffen muss. Dann wird die Defektgröße betlmmt, und es werden Defekte in Punkten gebildet, deren Abstand zwischen einer 50%igen Defektübenappung und der Doppelgrösse des Defekts bestimmt wird. Dabei werden Defektformpunkte längs der Polarisationsrichtung der Laserstrahlung angeordnet. Das Bündel wird auch an der Rückwand des Modells ohne Deckschicht konzentriert. Nachher oder gleichzeitig mit der ersten Konzentration muss zusätzlich ein oder einige Male Laserstrahlung innerhalb des Materials senkrecht zur Oberfläche und parallel zur ersten Schicht von Punkten konzentriert werden.

Das Gerät zum Schneiden von transparenten, nichtmetallischen Materialien umfasst ein Lasersystem, ein optomechanisches System der Strahlungsrichtung und -konzentration, einen Mechanismus für die wechselseitige Bewegung des Modells und des Laserfokalflecks, eine Videoüberwachungsvorrichtung und eine elektronische Steuerungs- und Überwachungsvorrichtung. Dabei ist das System der Strahlungsrichtung und -konzentration mit einer Polyfokallinse ausgerüstet, die aus zwei oder mehr Linsen mit verschiedener Brennweite besteht. Das System der Strahlungsrichtung und -konzentration kann auch eine Linse aus Zweistrahlenbrechungskristall aufweisen. Ein Mikroreißen des transparenten Modells kann durch Stoßionisation erreicht werden, die zum Laserdurchbruch führt. Dieser Vorgang wird durch eine Grenzenergiedichte und eine Grenzenstrahlungsleistung charakterisiert, denn es muss ein kleines, aber sehr starkes Energiefeld geschaffen werden. Dieser Effekt kann mit Hilfe von superkurzen Laserimpulsen des Pikosekundenbereichs erreicht werden. Die Verwendung eines Nd-YAG-Lasers mit der Wellenlänge von ca. 1 m/km und eines Bündels von hoher Qualität ermöglicht, einen kleinen Brennpunkt zu schaffen, dessen Größe der Diffraktionsgrenze ähnlich ist. Infolgedessen ist die Strahlungsdichte hoch, sogar wenn die gesamte Impulsenergie niedrig ist. Ein Modellreißen, dessen Richtung unter Kontrolle ist, wird in folgender Weise erreicht: durch die Wahl einer entsprechenden Geometrie und Polarisation des Laserbündels, eine sterische Anordnung auf dem Modell von Laserdurchbruchtracks (die erste Reihe von Defekten befindet sich in der Nähe der Rückwand des Modells) und die Wahl des Abstands zwischen den Strahlungskonzentrationspunkten. Die Bildung von zwei oder mehr Defekttracks gibt die Möglichkeit, starke (mehr als 300mkm) Modelle von besonders festen Materialien mit angezeigter Genauigkeit zu schneiden. Eine optimal niedrige Durchbruchgrenze wird durch eine spezielle Wahl der Laserimpulsdauer erreicht.

Die Verwendung einer Polyfokallinse, die aus zwei oder mehr Linsen mit verschiedener Brennweite oder einer Linse aus Zweistrahlenbrechungskristall besteht, ermöglicht die Bildung einer zweiten Defektschicht. Das führt zur Erhöhung der Schnittgenauigkeit, die innerhalb des Modells durch Schaffung einer besonderen Abstechrichtung der Modellzerbrechung bedingt ist.

Auf diese Weise erlaubt die Verwendung von Unterscheidungsmerkmalen der vorliegenden Erfindung ein Verfahren zu schaffen, das die Möglichkeit gibt, die erforderlichen Elemente mit einer Genauigkeit von 10mkm ohne Zerstörung der Deckschichten sogar aus besonders festen Materialien zu schneiden. Es sei erwähnt, dass das Verfahren nicht energieintensiv ist.

Die Erfindung wird nun anhand von Ausführungsbeispielen näher erläutert. Es zeigen:
- Fig. 1: einen Blockskizze des Geräts,
- Fig. 2: eine Konzentrationsvorrichtung,
- Fig. 3: mit den Teilen a, b und c einen Schnitt durch ein Modell aus Saphir bei zwei Energieimpulswerten von 12 und 20mkJ und
- Fig. 4: ein geritztes Modell mit Defekten.

Das Verfahren gemäß der Erfindung wird nun am Beispiel des Schneidgeräts näher erläutert. Ein Lasersystem ist mit 1, ein optomechanisches System der Strahlungsrichtung und -konzentration ist mit 2, ein Mechanismus für die Modellbewegung ist mit 3, eine Videoüberwachungsgerät ist mit 4 und eine elektronische Steuerungs- und Überwachungsvorrichtung ist mit 5 bezeichnet.

Die Qualität und Struktur der bearbeiteten Modelle wurde mit Hilfe eines Mikroskops geprüft.

Das Lasersystem 1 besteht aus einem Nd-YAG-Laser mit Impulslampenanregung. Der Laserimpuls wurde einer zweistufigen Dauerkompression nach den bakannten Methoden VRMB und VKR unterzogen. Das führte zu folgenden Ergebnissen: die summarische Impulsdauer betrug etwa 15-50ps; die Strahlungswellenlänge vergrößerte sich aufgrund der VKR bis zu 1,2mkm und die Impulsenergie bis zu 100mkJ; die Standardimpulsfrequenz betrug 15Hz. Für ein zweifaches Variieren der Impulsenergie wurde dem Strahlweg ein 60%iger Neutralfilter gestellt werden.

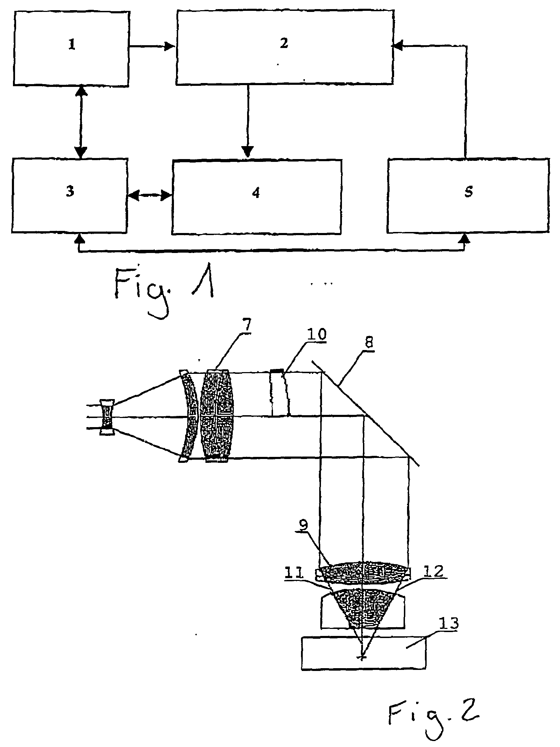

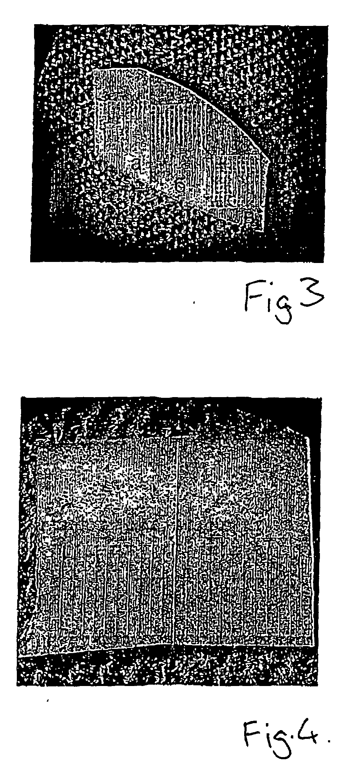

Das Konzentrationssystem 2 in Fig. 2 besteht aus einer Bestrahlungsoptik 7 (einem Teteskopsystem), einem dichroitischen Drehspiegel 8 und einer Fokussiermikrolinse 9. Die Lage der Mikrolinse wurde durch ein Feinmessgerät mit einer Genauigkeit von bis zu 5mkm kontrolliert. Bei der Arbeit wurden Mikrolinsen 9 mit einer Brennweite von 8 und 15mm verwendet. Die Linse 10 mit zwei Brennweiten, die zwischen dem System 7 und dem Spiegel 8 eingesetzt wurde, ergab die Möglichkeit, die Strahlen 11 und 12 an verschiedenen Orten nach der Modellhöhe zu konzentrieren.

Um die Entstehung von Spalten infolge eines Laserdurchbruchs zu erforschen, wurde ein Glasplättchen 12 mit einer Stärke von 1,2mm und ein Saphirplättchen mit einer Stärke (ohne Aufsprühstoff) von etwa 0,4mm verwendet, die gleichmäßig mit GaN gespritzt wurden und ein aufgesprühtes Halbteilernetz mit einem Abschnitt von 430mkm hatten. Die Saphirplättchen waren transparent, sie wurden auf der Aufsprühseite poliert, und an der anderen Seite waren sie rauh.

Der Querdurchnmesser der Laserbündelkaustik im Brennpunkt wurde mit Hilfe eines Tracks innerhalb des Modells (bei dem die Durchbruchgrenze hoch und die Kratergröße minimal ist) bestimmt und betrug 4-8mkm, was der Diffraktionsgrenze fast entsprach.

Der erste Schnitt wurde mit Hilfe des Laserstrahls 1 durch die transparente Seite in der Nähe der rauhen Rückwand durchgeführt. Die Tracktiefe in der Zone des Laserdurchbruchs betrug etwa 50mkm (Mikrolinse F=8mm) oder 80mkm (Mikrolinse F=15mm). Die Rückwand der Platte 13 wurde bei einer Impulsenergie von 20 und 12mkJ geritzt. Die erlaubte Grösse von Oberflächendefekten (bis 10mkm) wurde sicher bei einem Kleinleistungsschneiden erreicht, siehe Fig. 3a: Schneidergebnis bei einer Impulsenergie von 12mkJ, Fig. 3b: 20mkJ, Figur 3c: 20mkJ mit zwei Defektschichten. Die Zone der Beschädigungen und die Abweichung der Rissoberfläche von der Schnittlinie war nicht größer als 10mkm, wenn die Schnittlinien mit den kristallgraphischen Achsen nicht übereinstimmten. Bei Übereinstimmung einer Schnittlinie mit einer kristallgraphischen Achse wurde die Abweichung dadurch bestimmt, wie genau der Fokalfleck positioniert wurde.

Um die Vergrößerung des Spalts zu kontrollieren, wurde nicht weit von der Rückfläche ein zusätzlicher Schnitt ausgeführt. Durch diesen Schnitts entstanden zusätzliche Spalte, die in einer vorgegebenen Richtung innerhalb des Modells liefen. Das führte zur einer erheblichen Verminderung der Bruchgrenze. Dabei betrug das Auseinanderlaufen der Bündel im Glas 120mkm nach der Höhe und im Saphir 180mkm wegen des höheren Brechungsindexes. Die auf diese Weise gebildete Spaltenstruktur erlaubte ein befriedigendes Zerbrechen der Saphirplatte in Mikroelemente (400mkm), das durch Walzen mit Hilfe einer speziellen Rolle erreicht wurde. In Fig. 4 sind geritzte Modelle mit Defekten dargestellt, die durch eine Doppelkonzentration der Strahlung auf Defektschichten mit verschiedener Tiefe innerhalb des Modells erreicht wurden.

Beim Ritzen von Modellen mit Halbteilerdeckschicht wurde eine kurzbrennweitige Linse (F=8mm) verwendet. Dadurch konnte ein Ausbrennen der Deckschicht vermieden werden. Die Impulsenergie betrug dabei 12mkJ und die Impulsdauer 30ps. Die Energiestrahlungsdichte auf der Modelloberfläche war niedriger als die Zerstörungsgrenze der Deckschicht.

Die Entstehungsmechanismen eines Laserbruchs in transparenten Isolierstoffen wurden im Laufe der letzten zehn Jahren eingehend studiert. Diese Studien sind mit der Entwicklung der Femtosekunden-Lasertechnik verbunden. Im Werk von As-Chun Tien wird die Rolle von verschiedenen Ionisationsmechanismen bei der Entstehung des Laserbruchs abhängig von der Laserimpulsdauer (von Hunderten Pikosekunden bis Dutzenden Femtosekunden) beschrieben.

Der Durchbruch in transparenten Körpern ist mit einer schnellen Vergrößerung der Elektronendichte bis zum kritischen Niveau in der Leitfähigkeitszone verbunden; infolge der Dichtevergrößerung wird die Laserstrahlung durch das entstehende Plasma stark absorbiert. Der Körper wird durch die Druckwelle zerstört, die im Plasma entsteht. Ausgehend von den im Artikel angegebenen Schaubildem, die die Grenzdichte der Durchbruchsenergie als Funktion der Impulsdauer darstellen, kann der Initiierungsmechanismus in dem vom Erfinder verwendeten Bereich von etwa 30ps in folgender Weise betrachtet werden. In der Leitfähigkeitszone von festen Körpern treten immer wegen der Beimischung einige freie Elektronen auf.

Ein sehr starkes, elektrisches Laserwellenfold von etwa hundert MV/sm aktiviert die Elektronenbeschleunigung. So entsteht eine Energie, die für eine Stoßionisation der Gitteratome ausreicht. Infolgedessen entwickelt sich eine Elektronenlawine, die ihre kritische Dichte schnell erreicht.

Wenn die Impulsdauer einige Pikosekunden beträgt, entsteht außer der Stoßionisation auch eine Polyphotonenionisation, die aber die Impulsdauer weniger als auf eine Pikosekunde vergrößern kann. Dabei ist die Durchbruchsenergiedichte der Wurzel aus der Impulsdauer proportional, wenn die Impulsdauer nicht weniger als 10ps beträgt. Bei einer weiteren Verminderung der Impulsdauer verändert sich die Dichte nicht linear, doch ihr Wert ist fast immer fest (zum Beispiel etwa 1J/sm² beim geschmolzenen Quarz).

Der genannte Stossmechanismus kann zur Abhängigkeit der Durchbruchsgeometrie des festen Körpers von der Polarisationsrichtung des Laserstrahls führen. Da die Elektronen längs der Richtung des elektrischen Felds, d.h. des Polarisationsvektors, beschleunigt werden, muss sich die Elektronenlawine auch in diese Richtung erweitern. Auf diese Weise müssen die Plasmawolke und die entstehende Stoßwelle eine in der Polarisationsrichtung ausgedehnte Form aufweisen. Der Riss wird also auch enger und länger, wenn er längs der Polarisationsrichtung verläuft, oder breiter und ungerader, wenn er quer zu dieser Richtung verläuft. Das muss auch zur Verringerung der Bruchgrenze beim Zerbrechen der Platten längs des Schnitts führen, wenn der Schnitt in der Strahlpolarisationsrichtung verläuft.

Aus diesem Grund kann die Wahl des Impulsdauerbereichs erklärt werden. Wenn die Impulsdauer weniger als 10ps beträgt, wirken neben der Stoßionisation auch die Polyphotonen- und Tunnelionisation als Stoßmechanismus, wie es oben beschrieben ist. Aus Erfahrung ist Folgendes bekannt: wenn die Impulsdauer Hunderte von Femtosekunden oder weniger beträgt, entstehen starke, nichtlineare Effekte. Sie führen einerseits dazu, dass es unmöglich wird, das Laserbündel zu einem kleinen Fleck der erforderlichen Größe zu konzentrieren, und andererseits dazu, dass der Brechungsindex sich ändert und das transparente Material matt wird. Diese Mechanismen schließen die Möglichkeit des Laserbruchs der Unterlage fast aus und sind darum zum Schneiden nicht geeignet. Es ist aber sehr schwierig, die Impulsdauer mit dem Bereich von 500fs bis einigen Pikosekunden zu schaffen und dabei normale Frequenzparameter im Bereich von Dutzenden Hz bis Dutzenden kHz zu erhalten (bei der Synchronisationsart entsteht eine Taktfrequenz von Dutzenden und Hunderten MHz). Bei einer Impulsdauer von mehr als 100ps führt die erhöhte Energiewirkung zu einer bedeutenden Defektvergrößerung. Der thermische Gradient wirkt sich auch auf den Prozess aus. Das alles führt zu einer Verminderung der angezeigten Genauigkeitsparameter.

In dieser Weise wurde mit Hilfe des Stoßionisationsmechanismus das Ritzverfahren von transparenten, besonders festen, nichtmetallischen Materialien mit Halbteilerdeckschicht geschaffen, das die Möglichkeit ergibt, diese Materialien mit einer Genauigkeit von bis zu 10mkm zu schneiden.

## Patentansprüche

1. Verfahren zum Schneiden von nichtmetallischen Materialien mittels eines Laserstrahls,
**gekennzeichnet durch** folgende Schritte:
- der Laserstrahl wird von einem Impulslaser auf das Material gerichtet,
- die Laserstrahlung wird auf die Modelloberfläche oder innerhalb des Modells konzentriert, wodurch im Konzentrationspunkt ein Defekt entsteht,
- die Modelloberfläche wird der Wirkung einer mechanischen Kraft ausgesetzt, wobei eine Impulslaserstrahlung mit einer Wellenlänge von etwa 1mkm und einer Impulsdauer von 10-100ps verwendet wird und die Impulsenergie für die Entstehung eines Bruchs in der Konzentrationszone ausreichen muss und wobei beim Formen des Bündels davon ausgegangen wird, dass die Strahlungsdichte auf der Oberfläche die Zerstörungsgrenze der Halbteilerdeckschicht nicht übertreffen muss, und
- die Defektgröße wird ermittelz und Defekte werden in Punkten gebildet, deren Abstand zwischen einer 50%igen Defektüberlappung und einem Doppelabstand zwischen den Defekten bestimmt wird.

2. Verfahren nach Anspruch 1,
**daurch gekennzeichnet,**
**dass** die nichtmetallischen Materialien transparent sind und dass die Defektformpunkte längs der Polarisationsrichtung der Laserstrahlung angeordnet werden.

3. Verfahren nach Anspruch 1,
**daurch gekennzeichnet,**
**dass** die nichtmetallischen Materialien transparent sind, dass das Bündel an der Rückwand des Modells ohne Deckschicht konzentriert wird und dass danach oder gleichzeitig mit der ersten Konzentration zusätzlich ein oder einige Male die Laserstrahlung innerhalb des Modells senkrecht zur Oberfläche und parallel zur ersten Schicht von Defekten konzentriert wird.

4. Gerät zum Schneiden von transparenten, nichtmetallischen Materialien mittels Laserstrahlen,
**gekennzeichnet durch**
- ein Lasersystem,
- ein optomechanisches System der Strahlungsrichtung und -konzentration,
- einen Mechanismus zur wechselseitigen Bewegung des Modells und des Fokalflecks,
- eine Videoüberwachungsvorrichtung,
- eine elektronische Steuerungs- und Überwachungsvorrichtung,
wobei das System der Strahlungsrichtung und -konzentration mit einem Linsenkörper ausgerüstet ist, der aus zwei oder mehr Linsen mit verschiedener Brennweite besteht.

5. Gerät nach Anspruch 4,
**daurch gekennzeichnet,**
**dass** das System der Strahlungsrichtung und -konzentration eine Linse aus einem Zweistrahlenbrechungskristall aufweist.
